(19) Europäisches Patentamt
European Patent Office
Office européen des brevets

(11) **EP 4 331 868 B1**

(12) **EUROPEAN PATENT SPECIFICATION**

(45) Date of publication and mention
of the grant of the patent:
**04.02.2026 Bulletin 2026/06**

(21) Application number: **23189444.5**

(22) Date of filing: **03.08.2023**

(51) International Patent Classification (IPC):
**B60C 11/00** (2006.01)     *B60C 11/03* (2006.01)
*B60C 11/13* (2006.01)     *B60C 1/00* (2006.01)

(52) Cooperative Patent Classification (CPC):
**B60C 11/005;** B60C 1/0016; B60C 11/0309;
B60C 11/033; B60C 2011/0025; B60C 2011/0033;
B60C 2011/0355; B60C 2011/133; B60C 2200/06

(54) **HEAVY DUTY TIRE**

SCHWERLASTREIFEN

PNEU POUR POIDS LOURDS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.08.2022 JP 2022136322**

(43) Date of publication of application:
**06.03.2024 Bulletin 2024/10**

(73) Proprietor: **Sumitomo Rubber Industries, Ltd.
Kobe-shi, Hyogo 651-0072 (JP)**

(72) Inventor: **HIMEDA, Shingo
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**US-A1- 2012 234 442     US-A1- 2012 298 271
US-A1- 2021 395 499**

**Description**

TECHNICAL FIELD

The present invention relates to a heavy duty tire.

BACKGROUND OF THE INVENTION

JP 2007-126523 A describes a pneumatic tire that comprises a tread part consisting of a cap rubber layer and a base rubber layer and that realizes fuel efficiency without deterioration of abrasion resistance.

SUMMARY OF THE INVENTION

In JP 2007-126523 A, a land part (block) of the tread is composed of a single rubber layer. Accordingly, there is a concern that, in a case where this land part is applied to a tire to which a high load is applied like a heavy duty tire, uneven abrasion occurs when a high load is locally applied to a tread rubber.

A tire in accordance with the preamble of claim 1 is known from US 2012/234442 A1. Related tires are described in US 2012/298271 A1 and US 2021/395499 A1.

It is an object of the present invention to improve uneven-abrasion resistance.

The present invention relates to:

a heavy duty tire comprising a tread part,
wherein the tread part comprises a plurality of circumferential grooves extending continuously in a tire circumferential direction,
wherein the tread part at least comprises

a first layer constituting a tread surface,
a second layer adjacent to the inner side of the first layer in a tire radial direction, and
a third layer present on the inner side of the second layer in the tire radial direction,

wherein the first layer, the second layer, and the third layer are composed of rubber compositions each comprising a rubber component,
wherein, when a tan $\delta$ at 70°C of the rubber composition constituting the first layer is defined as 70°C tan $\delta$1, and a tan $\delta$ at 70°C of the rubber composition constituting the second layer is defined as 70°C tan $\delta$2, 70°C tan $\delta$1/70°C tan $\delta$2 is less than 1.0, and
wherein, when a tire outer diameter is defined as Dt, in m, a thickness of the first layer is defined as t1, in mm, and a groove depth at a deepest part of the circumferential grooves is defined as H, in mm, 70°C tan $\delta$2/Dt is greater than 0.09, and t1/H is 0.90 or less.

According to an embodiment of the invention, 70°C tan $\delta$2 is greater than 0.11.

According to an embodiment of the invention 70°C tan $\delta$1 is less than 0.10.

According to an embodiment of the invention, when a and ratio in a grounding surface of the tread part is defined as R, 70°C tan $\delta$1/R is less than 0.120.

According to an embodiment of the invention, a Shore hardness (Hs) of the first layer, measured in accordance with JIS K 6253-3:2012 under a condition of a temperature at 23°C, is 65 or more.

According to an embodiment of the invention, when a land ratio in a grounding surface of the tread part is defined as R, 70°C tan $\delta$2/R is 0.165 or more.

According to an embodiment of the invention, a modulus M2 at 200% elongation of the rubber composition constituting the second layer is 9.0 MPa or less.

According to an embodiment of the invention, a mass content ratio of silica contained to carbon black in the rubber composition constituting the second layer is 0.50 or more.

According to an embodiment of the invention, elongation at break EB2 of the rubber composition constituting the second layer is 500% or more.

According to an embodiment of the invention, the rubber component constituting the first layer comprises an isoprene-based rubber.

According to an embodiment of the invention, a total styrene amount in the rubber component constituting the second layer is less than 20% by mass, preferably less than 16% by mass, more preferably less than 12% by mass, further preferably less than 8.0% by mass.

According to an embodiment of the invention, when a tan $\delta$ at 70°C of the rubber composition constituting the third layer is defined as 70°C tan $\delta$3, 70°C tan 52/70°C tan $\delta$3 is greater than 1.0, preferably greater than 1.2, more preferably greater than 1.4, further preferably greater than 1.6 and less than 4.0.

According to an embodiment of the invention, H is greater than 10 mm and less than 20 mm.

According to an embodiment of the invention, at least one groove wall of each circumferential groove is provided with a recessed part that is recessed outward in a groove width direction from a groove edge appearing on a grounding face of the tread part.

According to an embodiment of the invention, when a distance, from an end on the outer side of the recessed part in the tire radial direction to the tread surface, of the circumferential groove having a recessed part that is recessed outward in the groove width direction from the groove edge appearing on the grounding face of the tread part provided on the groove wall is defined as L, L/t1 is greater than 1.0.

According to the present invention, provided is a heavy duty tire enabling improvement of uneven-abrasion resistance.

BRIEF DESCRIPTION OF THE DRAWINGS

FIG. 1 is a development view in which a tread pattern of a tire according to one embodiment of the present invention is developed on a plane.

FIG. 2 is a cross-sectional view illustrating a part of a circumferential groove according to the present embodiment.

FIG. 3 is a cross-sectional view illustrating a part of another circumferential groove according to the present embodiment.

DETAILED DESCRIPTION

The tire that is one embodiment of the present invention is a heavy duty tire comprising a tread part, wherein the tread part comprises a plurality of circumferential grooves extending continuously in a tire circumferential direction, wherein the tread part at least comprises a first layer constituting a tread surface, a second layer adjacent to the inner side of the first layer in a tire radial direction, and a third layer present on the inner side of the second layer in the tire radial direction, wherein the first layer, the second layer, and the third layer are composed of rubber compositions each comprising a rubber component, wherein, when a tan $\delta$ at 70°C of the rubber composition constituting the first layer is defined as 70°C tan $\delta$1, and a tan $\delta$ at 70°C of the rubber composition constituting the second layer is defined as 70°C tan $\delta$2, 70°C tan $\delta$1/70°C tan $\delta$2 is less than 1.0, and wherein, when a tire outer diameter is defined as Dt, in m, a thickness of the first layer is defined as t1, in mm, and a groove depth at a deepest part of the circumferential grooves is defined as H, in mm, 70°C tan $\delta$2/Dt is greater than 0.09, and t1/H is 0.90 or less.

The reason for improvement of uneven-abrasion resistance of the tire of the present invention is considered as follows, although the following consideration is not intended to be bound by any theory.

When the tire is produced such that a ratio (t1/H) of the thickness of the first layer to the groove depth at the deepest part of the circumferential grooves is 0.90 or less, it is formed such that the deepest part of the groove bottom of the circumferential groove is located on an inner side in a tire radial direction with respect to an outer surface of the second layer, and thus, the inside of the block is formed by two or more rubber layers. Additionally, when the 70°C tan $\delta$ of the second layer is greater than the 70°C tan $\delta$ of the first layer, deformation energy during running can be released in a form of heat inside the block, and it is considered that abrasion resistance inside a land part can be improved. Moreover, when the 70°C tan $\delta$ of the first layer has a small value, heat generation outside the block is suppressed, and thus it is considered that a surface of the block part has a high temperature and softens, thereby enabling suppression of deterioration of abrasion resistance. Furthermore, when the tread part comprises three or more layers, it is considered that presence of a further interface on the inner side of the second layer in a tire radial direction can make it easy to absorb deformation or shock by this interface part when the deformation or shock transmits from the first layer to the inside of the tread.

On the other hand, when the tire outer diameter is increased, energy due to the inertia of the tire increases and a period of time during which any point of the tread touches a road surface becomes long. Accordingly, when the tire outer diameter is increased, energy transmitting to the tread also increases, and a period of time during which the tire touches a road surface when the tire moves per unit distance also becomes long. From this, when the ratio of the 70°C tan $\delta$ of the second layer to the tire outer diameter is greater than the predetermined value, it is considered that the effect of absorbing deformation inside the tread can be increased.

Additionally, with cooperation of these features, local deformation due to a road surface can be absorbed by the second layer and the interface in each land part, and softening of a rubber due to heat generation by the first layer can be suppressed, so that abrasion resistance of land parts whose deformation becomes large during grounding contact is improved, and as a result, the land parts abrade uniformly. Accordingly, it is considered that uneven-abrasion resistance can be improved.

From the viewpoint of making energy to be released by the second layer generating heat when a load is applied to the tire, the 70°C tan $\delta 2$ is preferably greater than 0.11.

From the viewpoint of suppressing softening of a rubber due to a rise in temperature of the first layer, the 70°C tan $\delta 1$ is preferably less than 0.10.

When a land ratio in a grounding surface of the tread part is defined as R, 70°C tan $\delta 1/R$ is preferably less than 0.120.

When 70°C tan $\delta 1/R$ is within the above-described range and the land ratio R is increased with an increase of the 70°C tan $\delta$ of the first layer, deformation of the first layer is decreased, and it is considered that heat generation is suppressed. As a result, softening of the first layer is reduced, and it is considered that uneven-abrasion resistance is improved.

A Shore hardness (Hs) of the first layer is preferably 65 or more.

When the Shore hardness (Hs) of the first layer is within the above-described range to suppress deformation of the first layer, it is considered that uneven-abrasion resistance is improved.

70°C tan $\delta 2/R$ is preferably 0.165 or more.

When 70°C tan $\delta 2/R$ is within the above-described range to increase 70°C tan $\delta$ of the second layer relative to the land ratio R, an energy absorption efficiency in the second layer becomes high, and it is considered that uneven-abrasion resistance can be improved.

A modulus M2 at 200% elongation of the rubber composition constituting the second layer is preferably 9.0 MPa or less.

When the modulus M2 at 200% elongation of the rubber composition constituting the second layer is within the above-described range, the inside of the second layer deforms flexibly when deformation that the first layer cannot absorb enough,, due to a road surface, occurs, and it is considered that deformation can be easily absorbed.

A mass content ratio of silica to carbon black in the rubber composition constituting the second layer is preferably 0.50 or more.

When silica is compounded in the second layer that is a middle rubber layer to improve elongation, shock that the block receives can be mitigated, and it is considered that uneven-abrasion resistance is improved.

Elongation at break EB2 of the rubber composition constituting the second layer is preferably 500% or more.

When the elongation at break of the rubber composition constituting the second layer is within the above-described range, it is considered that the second layer can be easily deformed.

The rubber component constituting the first layer preferably comprises an isoprene-based rubber from the viewpoint of the effects of the present invention.

A total styrene amount in the rubber component constituting the second layer is preferably less than 20% by mass.

When the total styrene amount in the rubber component constituting the second layer is within the above-described range, a minute styrene domain is formed in the second layer, and it is considered that deformation from the outside can be easily absorbed by an interface between the styrene domain and surrounding rubber molecular chains.

When a tan $\delta$ at 70°C of the rubber composition constituting the third layer is defined as 70°C tan $\delta 3$, 70°C tan $\delta 2/70°C$ tan $\delta 3$ is preferably greater than 1.0.

When heat generation of the second layer is increased relative to heat generation of the rubber composition constituting the third layer, also in a case where deformation that the first layer cannot absorb enough occurs, it is considered that the deformation can be easily absorbed by the second layer.

H is preferably greater than 10 mm and less than 20 mm from the viewpoint of the effects of the present invention.

At least one groove wall of each circumferential groove is preferably provided with a recessed part that is recessed outward in a groove width direction from a groove edge appearing on a grounding face of the tread part.

When such a recessed part is provided on the groove wall of the circumferential groove, an air gap is formed inside the tread, and it is considered that shock can be absorbed and propagation of the shock can be suppressed by the air gap.

When a distance, from an end on the outer side of the recessed part in the tire radial direction to the tread surface, of the circumferential groove having a recessed part that is recessed outward in the groove width direction from the groove edge appearing on the grounding face of the tread part provided on the groove wall is defined as L, L/t1 is preferably greater than 1.0.

When the recessed part is present on the inner side in the tire radial direction with respect to the first layer, the air gap is formed on the second layer or the following layers, and it is considered that shock and deformation can be easily absorbed inside the tire.

The tread part preferably comprises a plurality of lateral grooves extending in a tire width direction.

When the tread part comprises the lateral grooves, it is considered that it become easy for the block part to deform also in the tire circumferential direction.

<Definition>

A "tread part" is a part forming a grounding surface of a tire and is a member located on the outer side in a tire radial direction with respect to members forming a tire skeleton with steel or textile material, such as a belt layer, a belt reinforcement layer, a carcass layer, and the like, on a cross-section in the tire radial direction when the tire comprises these members.

A "standardized rim" is a rim defined for each tire in a standard system including a standard, on which the tire is based, by the standard, for example, a "standard rim" in JATMA, "Design Rim" in TRA, or "Measuring Rim" in ETRTO. JATMA, ETRTO, and TRA are referred to in this order, and when an applicable size is found during reference to the standard, a standardized rim is based on that standard.

A "standardized internal pressure" is an air pressure defined for each tire in a standard system including a standard, on which the tire is based, by each standard, for example, a "MAXIMUM AIR PRESSURE" in JATMA, a maximum value described in the table "TIRE LOAD LIMITS AT VARIOUS COLD INFLATION PRESSURES" in TRA, or "INFLATION PRESSURE" in ETRTO. Like the standardized rim, JATMA, ETRTO, and TRA are referred to in this order, and when an applicable size is found during reference to the standard, a standardized internal pressure is based on that standard.

A "standardized state" is a state in which the tire is rim-assembled to a standardized rim, filled with air at a standardized internal pressure, and applied with no load. Besides, unless otherwise noted, in the present specification, a size of each part of a tire is measured in the above-described standardized state.

A "standardized load" is a load defined for each tire in a standard system including a standard, on which the tire is based, by each standard, for example, the "MAXIMUN LOAD CAPACITY" in JATMA, the maximum value described in the table "TIRE LOAD LIMITS AT VARIOUS COLD INFLATION PRESSURES" in the TRA, or "LOAD CAPACITY" in ETRTO. Like the standardized rim and the standardized internal pressure, JATMA, ETRTO, and TRA are referred to in this order, and when an applicable size is found during reference to the standard, a standardized load is based on that standard.

A "grounding end" means a grounding position located on the outermost side in the tire width direction when a standardized load is applied to the tire in a standardized state and the tire comes into contact with a flat surface at a camber angle of 0°.

A "thickness of each of rubber layers constituting the tread part" refers to a thickness of each lubber layer on a tire equatorial plane on a cross-section obtained by cutting the tire along a plane including a tire rotation axis. For example, a thickness of the first layer refers to a direct distance in the tire radial direction from the tread outermost surface to an interface on the inner side of the first layer in the tire radial direction on the tire equatorial plane. Besides, when circumferential grooves are provided on the tire equatorial plane, the thickness of each of the rubber layers constituting the tread part is defined as a thickness of each rubber layer in a central part of a land part nearest to tire equatorial plane in the tire width direction. The "land part nearest to tire equatorial plane" refers to a land part having a groove edge of circumferential grooves present on the tire equatorial plane, the groove edge being nearest to the tire equatorial plane. When such land parts are present on the both lateral sides in the tire width direction, the thickness of each of the rubber layers constituting the tread part is defined as an average value of thicknesses of respective rubber layers in the central parts of these two land parts in the tire width direction. Moreover, when an energizing member or the like is present on a land part on the tire equatorial plane, which makes an interface unclear, measurement shall be made after virtually joining interfaces together that are interrupted by the energizing member or the like.

The "grooves", including the circumferential grooves and the lateral grooves, mean recessed parts each having a depth greater than at least 3 mm. Particularly, a groove whose opening width on a tire surface is 2 mm or less is called a "sipe".

The "block" refers to an area bounded by a circumferential groove, a lateral groove, and a grounding end, the circumferential groove and the lateral groove being formed on the tread part and each having an opening width of greater than 2.0 mm on the tread surface, and refers to a land part partitioned by a circumferential groove and a grounding end when it does not have any lateral groove.

A "land ratio R" is a ratio of a total area of a grounding surface touching a flat surface to a total surface area of a tread surface that is in a state where it is assumed that all grooves are filled when a standardized load is applied to a tire in a standardized state and the tire touches the flat surface at a camber angle of 0°. Here, the term "all grooves" means that they include grooves that do not fall under circumferential grooves and lateral grooves.

The "groove depth at the deepest part of the circumferential grooves" is calculated by a distance from the tread surface to the deepest part of the groove bottom of the circumferential grooves. Besides, the "deepest part of the groove bottom of the circumferential grooves" means the deepest part of the groove bottom of a circumferential groove having the deepest groove depth among circumferential grooves adjacent to a block.

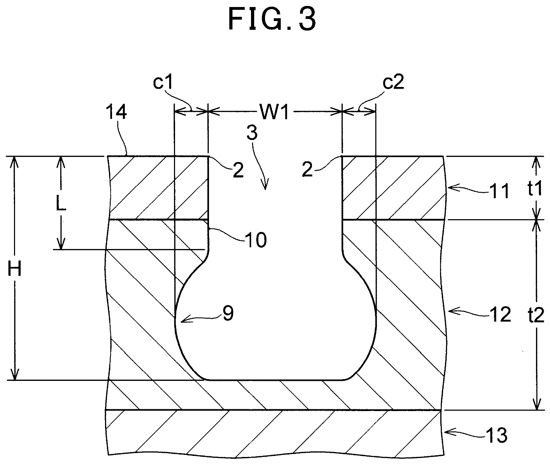

A distance L, of a circumferential groove whose groove wall is provided with a recessed part that is recessed outward in the groove width direction from a groove edge appearing on a grounding face of the tread part, from an end on the outer side of the recessed part in the tire radial direction to the tread surface refers to a direct distance from an inflection point, at which a groove width becomes wide in a direction from the tire surface side to the inner side of the tire on a cross-section in the tire radial direction, to a straight line connecting ends on the tire outmost surface side of the circumferential groove (FIG. 3). When the groove width of the circumferential groove continues to gradually increase from the end of the tire surface side to the inner side of the tire, L is 0.

A "softening agent" is a material giving a rubber component plasticity and is a component extracted from a rubber composition using acetone. Examples of the softening agent includes a softening agent that is a liquid (in a liquid state) at 25°C and a softening agent that is a solid at 25°C. However, examples of the softening agent shall not include wax and stearic acid commonly used in the tire industry.

A "content of a softening agent" also comprises an amount of a softening agent contained in an extended rubber component previously extended with the softening agent such as oil, a resin component, a liquid rubber component, and the like. Moreover, the same applies to a content of oil, a content of a resin component, and a content of a liquid rubber, and for example, in a case where the extending component is oil, the extending oil is included in the content of oil.

<Measuring method>

The "thickness of each of the rubber layers constituting the tread part" is measured in a state where a width of a bead part and a width of a standardized rim are fit together after cutting a tire along a plane including a tire rotation axis.

A "70°C tan $\delta$" is a loss tangent measured under a condition of a temperature at 70°C, a frequency of 10 Hz, an initial strain of 10%, a dynamic strain of 1%, and an extension mode. A sample for measurement of 70°C tan $\delta$ is a vulcanized rubber composition having a length of 20 mm, a width of 4 mm, and a thickness of 1 mm. In a case where a sample is prepared by being cut out from a tire, the sample is cut out from the tread part of the tire such that the tire circumferential direction becomes a long side and the tire radial direction becomes a thickness direction.

The "Shore hardness" is a Shore hardness (Hs) measured in accordance with JIS K 6253-3:2012 using a type A durometer under a condition of a temperature at 23°C. A sample for measurement of Shore hardness is prepared by being cut out from the tread part such that the tire radial direction becomes a thickness direction. Moreover, the measurement is performed by pressing a measuring instrument against the sample from the grounding surface side of the sample for measurement of hardness.

An "elongation at break EB" is an elongation at break (elongation at cutting) (%) measured under an atmosphere at 23°C, under a condition of a tension rate of 3.3 mm/sec, in accordance with JIS K 6251:2017. A sample for measurement of EB is a vulcanized rubber test piece of dumbbell-shaped No. 7 having a thickness of 1 mm. In a case where a sample is prepared by being cut out from the tire, the sample is cut out from the tread part of the tire such that the tire circumferential direction becomes a tensile direction and the tire radial direction becomes a thickness direction.

A "modulus at 200% elongation" is a tensile stress (MPa) at 200% elongation in a grain direction (a rolling direction in forming a rubber sheet by extrusion or shearing process), the tensile stress being measured in accordance with JIS K 6251:2017 under an atmosphere at 23°C under a condition of a tension rate of 3.3 mm/sec. A sample for measurement in this case is prepared in the same manner as in the case of EB.

The "total area of a grounding surface" is calculated from a grounding shape of the tire. The grounding shape is obtained by assembling the tire to a standardized rim, filling the tire with air at a standardized internal pressure, and leaving the tire to stand at 25°C for 24 hours, followed by applying ink to a tread surface, imposing a load of the maximum load capacity on the tire to press the tread surface on cardboard (a camber angle is 0°), and performing transcription to a paper. Additionally, the tire is rotated in 72 degree increments in the circumferential direction, and the transcription is performed at five portions of the tire. That is, grounding shapes are obtained five times. An actual grounding area is calculated as an average value of areas of the five inked portions.

A "styrene content" is a value calculated by $^1$H-NMR measurement and is applied to a rubber component having a repeating unit derived from styrene such as, for example, a SBR and the like. A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR and the like.

The "total styrene amount in the rubber component" is a total content (% by mass) of styrene units compounded in 100% by mass of the rubber component and is a value obtained by calculating, for each rubber component, a value obtained by multiplying a styrene content (% by mass) by a mass fraction in the rubber component and summing up these values. Specifically, it is calculated by $\Sigma$ (styrene content (% by mass) of each styrene unit-containing rubber $\times$ content (% by mass) of each styrene unit-containing rubber in rubber component / 100).

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). The Mw is applied to, for example, a SBR, a BR, or the like.

A "nitrogen adsorption specific surface area (N$_2$SA) of carbon black" is measured according to JIS K 6217-2:2017. A "nitrogen adsorption specific surface area (N$_2$SA) of silica" is measured by a BET method according to ASTM D3037-93.

A "softening point of the resin component" is a temperature at which a sphere drops when the softening point specified in JIS K 6220-1: 2015 7.7 is measured with a ring and ball softening point measuring device.

A procedure for producing a tire that is one embodiment of the present invention will be described below in detail. However, the following descriptions are illustrative for explaining the present invention and are not intended to limit the technical scope of the present invention to this description range only.

[Tire]

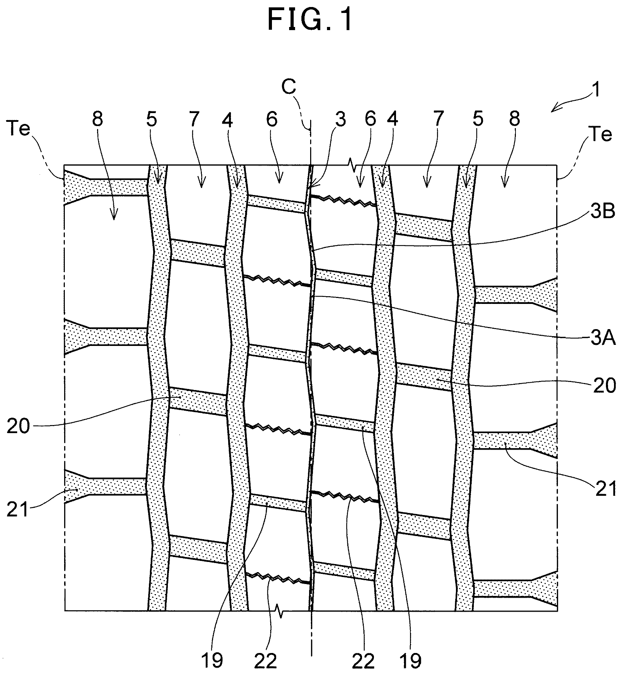

FIG. 1 shows one example of a development view in which a tread pattern of a tire according to one embodiment of the present invention is developed on a plane. However, the present invention is not limited to this. As shown in Fig. 1, in a tread part 1, a pair of center land parts 6, 6, a pair of middle land parts 7, 7, and a pair of shoulder parts 8, 8 are provided by circumferential grooves 3, 4, and 5 extending continuously in a tire circumferential direction. Each center land part 6 is formed between a center circumferential groove 3 and a middle circumferential groove 4. Each middle land part 7 is formed between a middle circumferential groove 4 and a shoulder circumferential groove 5. Each shoulder land part 8 is formed between a shoulder circumferential groove 5 and a grounding end Te.

Each center land part 6 is provided with a plurality of center lateral grooves 19 each crossing the center land part 6 and communicating with the center circumferential groove 3 and the middle circumferential groove 4, and independent blocks are formed in each center land part 6. Each middle land part 7 is provided with a plurality of middle lateral grooves 20 each crossing the middle land part 7 and communicating with the middle circumferential groove 4 and the shoulder circumferential groove 5, and independent blocks are formed in each middle land part 7. Each shoulder land part 8 is provided with a plurality of shoulder lateral grooves 21 each communicating with the shoulder circumferential groove 5.

In FIG. 1, the center circumferential grooves 3 extend in zigzag shape. Moreover, each of the center circumferential grooves 3 comprises center long side parts 3A and center short side parts 3B alternating with the center long side parts. The center long side parts 3A incline to one side relative to the tire circumferential direction. The center short side parts 3B incline in a direction opposite to the direction in which the center long side parts 3A incline.

The center lateral grooves 19 and the middle lateral grooves 20 linearly extend in FIG. 1, but the present invention is not limited to such an aspect, and they may be those extending, for example, in a wavy, sinusoidal, or zigzag shape.

Each center land part 6 is provided with a center sipe 22 communicating with the center circumferential groove 3 and the middle circumferential groove 4. Such a sipe deforms in a direction in which its width is closed when a block edge of the center land part 6 in the tire circumferential direction touches the ground, so that adjacent wall surfaces of the sipe closely adhere to each other for supporting each other, and deterioration of rigidity of a land part can be suppressed. The center sipe 22 extends in zigzag shape, but the present invention is not limited to such an aspect, and the center sipe may be one extending, for example, in a wavy or sinusoidal shape or extending linearly.

A land ratio R in a grounding surface of the tread part is preferably 0.65 or more, more preferably 0.70 or more, further preferably 0.75 or more. Moreover, the land ratio R is preferably 0.95 or less, more preferably 0.90 or less, further preferably 0.85 or less.

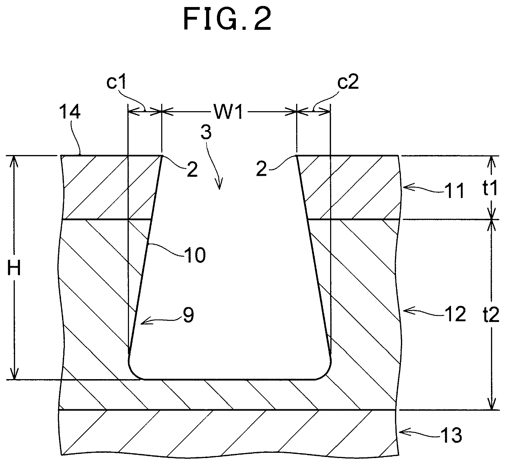

FIG. 2 is a cross-sectional view illustrating a part of a circumferential groove according to the present embodiment. In FIG. 2, a vertical direction is a tire radial direction, a horizontal direction is a tire axial direction, and a direction perpendicular to a paper surface is a tire circumferential direction.

As illustrated in the drawing, the tread part of the tire according to the present embodiment comprises a first layer 11, a second layer 12, and a third layer 13, wherein an outer surface of the first layer 11 constitutes a tread surface, the second layer 12 is adjacent to the inner side of the first layer 11 in the tire radial direction, and the third layer 13 is present on the inner side of the second layer 12 in the tire radial direction. Moreover, as long as the object of the present invention is achieved, one or two or more rubber layers may be further provided between the second layer 12 and the third layer 13 and/or between the third layer 13 and a belt layer (not shown in the drawings).

A thickness t1 of the first layer 11 is preferably 5 mm or more, more preferably 8 mm or more, further preferably 10 mm or more, from the viewpoint of the effects of the present invention. On the other hand, t1 is preferably 20 mm or less, more preferably 18 mm or less, further preferably 15 mm or less.

A thickness t2 of the second layer 12 is preferably 1 mm or more, more preferably 3 mm or more, further preferably 5 mm or more, from the viewpoint of the effects of the present invention. On the other hand, t2 is preferably 15 mm or less, more preferably 12 mm or less, further preferably 10 mm or less.

A groove depth H of each of the circumferential grooves is preferably greater than 4 mm, more preferably greater than 7 mm, further preferably greater than 10 mm, particularly preferably greater than 12 mm, from the viewpoint of the effects of the present invention. On the other hand, H is preferably less than 26 mm, more preferably less than 24 mm, further preferably less than 22 mm, particularly preferably less than 20 mm.

The tire according to the present embodiment is formed such that the deepest part of the groove bottom of the circumferential grooves is located on the inner side in the tire radial direction with respect to the outer surface of the second layer 12, and the inner side of each block is formed of two or more rubber layers. t1/H is 0.09 or less, preferably 0.85 or less, more preferably 0.80 or less, from the viewpoint of the effects of the present invention. On the other hand, a lower limit value of t1/H is, but not particularly limited to, preferably 0.20 or more, more preferably 0.30 or more, further preferably 0.40 or more.

At least one groove wall of each circumferential groove is preferably provided with a recessed part that is recessed outward in the groove width direction from a groove edge 2 appearing on a grounding face of the tread part. When such a recessed part is provided on the groove wall of the circumferential groove, an air gap is formed inside the tread part, and it is considered that shock can be absorbed and propagation of the shock can be suppressed by the air gap. In FIG. 2, recessed parts 9 are provided on both groove walls 10 of a circumferential groove 3. In FIG. 2, the groove width of the circumferential groove 3 continues to gradually increase from the end on the tire surface side toward the inner side in the tire radial direction, but the present invention is not limited to such an aspect.

FIG. 3 is a cross-section illustrating a part of another circumferential groove according to the present embodiment. In FIG. 3, a groove width of a circumferential groove 3 is constant in a range of a distance L from the tread surface 14 t and gradually increases therefrom toward the inner side in the tire radial direction, thereby forming a recessed part 9.

The distance L, of the circumferential groove whose groove wall is provided with the recessed part that is recessed outward in the groove width direction from the groove edge appearing on the grounding face of the tread part, from the outer end of the recessed part in the tire radial direction to the tread surface is preferably larger than t1. When the recessed part is present on the inner side in the tire radial direction with respect to the first layer, the air gap is formed on the second layer or the following layers, and it is considered that shock and deformation can be easily absorbed inside the tire. L/t1 is preferably greater than 1.0, more preferably greater than 1.1, further preferably greater than 1.2. On the other hand, an upper limit value of L/t1 is, but not particularly limited to, preferably less than 4.0, more preferably less than 3.0, further preferably less than 2.0.

L is preferably greater than 0 mm, more preferably greater than 5 mm, further preferably greater than 8 mm. On the other hand, L is preferably less than 25 mm, more preferably less than 21 mm, further preferably less than 16 mm.

A total amount of recession of the circumferential groove 3 ($c_1 + c_2$ in FIGS. 2 and 3) is preferably 0.10 to 5.00 times, more preferably 0.20 to 3.00 times, further preferably 0.30 to 1.00 times as large as the groove width W1 of the circumferential groove 3. Besides, in a case where a plurality of circumferential grooves each having such a recessed part are present, a total amount of recession of any one of the circumferential grooves may satisfy the above-described relationship, or all the circumferential grooves each having such a recessed part may satisfy the above-described relationship.

The tan $\delta$ at 70°C (70°C tan $\delta$1) of the rubber composition constituting the first layer is preferably less than 0.20, more preferably less than 0.16, further preferably less than 0.12, particularly preferably less than 0.10, from the viewpoint of suppressing softening of a rubber due to a rise in temperature of the first layer. On the other hand, it is preferably 0.03 or more, more preferably 0.04 or more, further preferably 0.05 or more, from the viewpoint of absorbing deformation due to a road surface.

A tan $\delta$ at 70°C (70°C tan $\delta$2) of the rubber composition constituting the second layer is preferably greater than 0.07, more preferably greater than 0.09, further preferably greater than 0.10, particularly preferably greater than 0.11, from the viewpoint of making energy to be released by the second layer generating heat when a load is applied to the tire. On the other hand, it is preferably 0.30 or less, more preferably 0.25 or less, further preferably 0.20 or less, particularly preferably 0.18 or less, from the viewpoint of suppressing an excessive heat generation inside the block.

A tan $\delta$ at 70°C (70°C tan $\delta$3) of the rubber composition constituting the third layer is preferably 0.24 or less, more preferably 0.19 or less, further preferably 0.14 or less, particularly preferably 0.09 or less, from the viewpoint of suppressing an excessive heat generation inside the block. Moreover, the 70°C tan $\delta$3 is preferably 0.03 or more, more preferably 0.04 or more, further preferably 0.05 or more.

In the present embodiment, 70°C tan $\delta$1/70°C tan $\delta$2 is less than 1.0, preferably less than 0.95, more preferably less than 0.90, further preferably less than 0.85, particularly preferably less than 0.80. When 70°C tan $\delta$1/70°C tan $\delta$2 is within the above-described ranges, energy can be released in a form of heat inside the block, and it is considered that uneven-abrasion resistance can be improved. Moreover, it is considered that heat generation outside the block is suppressed and a surface of the block part has a high temperature and softens, whereby deterioration of uneven abrasion can be suppressed. On the other hand, a lower limit value of 70°C tan $\delta$1/70°C tan $\delta$2 is, but not particularly limited to, preferably greater than 0.40, more preferably greater than 0.50, further preferably greater than 0.60.

70°C tan $\delta$2/70°C tan $\delta$3 is preferably greater than 1.0, more preferably greater than 1.2, further preferably greater than 1.4, further preferably greater than 1.6, particularly preferably greater than 1.8. When heat generation of the second layer is enhanced relative to heat generation of the rubber composition constituting the third layer, it is considered that deformation can be easily absorbed by the second layer even in a case where deformation that the first layer cannot absorb enough occurs. On the other hand, an upper limit value of 70°C tan $\delta$2/70°C tan $\delta$3 is, but not particularly limited to, preferably less than 4.0, more preferably less than 3.0.

Besides, 70°C tan δ of each rubber layer can be appropriately adjusted depending on types or compounding amounts of a rubber component, a filler, a softening agent, and the like that are described below.

A modulus at 200% elongation (M1) of the rubber composition constituting the first layer is preferably 15.0 MPa or less, more preferably 14.0 MPa or less, further preferably 13.0 MPa or less, particularly preferably 12.0 MPa or less. Moreover, a modulus at 200% elongation (M2) of the rubber composition constituting the second layer is preferably 13.0 MPa or less, more preferably 11.0 MPa or less, further preferably 10.0 MPa or less, particularly preferably 9.0 MPa or less. On the other hand, each of lower limit values of M1 and M2 is, but not particularly limited to, preferably 2.0 MPa or more, more preferably 3.0 MPa or more, further preferably 4.0 MPa or more. Besides, a modulus at 200% elongation of the rubber composition constituting the third layer is not particularly limited.

Elongation at break (EB1) of the rubber composition constituting the first layer is preferably 420% or more, more preferably 440% or more, further preferably 460% or more. Moreover, elongation at break (EB2) of the rubber composition constituting the second layer is preferably 440% or more, more preferably 470% or more, further preferably 500% or more. Besides, upper limit values of EB1 and EB2 are not particularly limited.

Besides, EB and the modulus at 200% elongation of each rubber layer can be appropriately adjusted depending on types or compounding amounts of the rubber component, filler, softening agent, and the like that are described below.

A Shore hardness (Hs) of the first layer is preferably 55 or more, more preferably 60 or more, further preferably 65 or more. When the Shore hardness of the first layer is set to be within the above-described ranges to suppress deformation of the first layer, it is considered that uneven-abrasion resistance can be improved. Moreover, the Shore hardness (Hs) of the first layer is preferably 80 or less, more preferably 75 or less, further preferably 70 or less. Besides, the Shore hardness can be appropriately adjusted depending on types or compounding amounts of the rubber component, filler, plasticizing agent, and the like.

A tire outer diameter Dt is preferably 0.70 m or more, more preferably 0.80 m or more, further preferably 0.90 m or more. Moreover, Dt is preferably 1.20 m or less, more preferably 1.10 m or less.

In the present embodiment, 70°C tan δ2/Dt is greater than 0.09, preferably greater than 0.10, more preferably greater than 0.12, further preferably greater than 0.14. When 70°C tan δ2/Dt is within the above-described ranges, it is considered that an effect of absorbing deformation inside the tread can be enhanced. On the other hand, an upper limit value of 70°C tan δ2/Dt is, but not particularly limited to, preferably less than 0.24, more preferably less than 0.22.

70°C tan δ1/R is preferably less than 0.150, more preferably less than 0.140, further preferably less than 0.130, further preferably less than 0.120, particularly preferably less than 0.115. When 70°C tan δ1/R is within the above-described ranges and the land ratio R is increased with an increase of 70°C tan δ of the first layer, deformation of the first layer is decreased, and it is considered that heat generation is suppressed. On the other hand, a lower limit value of 70°C tan δ1/R is, but not particularly limited to, preferably 0.030 or more, more preferably 0.040 or more, further preferably 0.050 or more, particularly preferably 0.060 or more.

70°C tan δ2/R is preferably 0.100 or more, more preferably 0.130 or more, further preferably 0.150 or more, further preferably 0.160 or more, particularly preferably 0.165 or more. When 70°C tan δ2/R is within the above-described ranges and the land ratio R is decreased relative to 70°C tan δ of the second layer, it is considered that it becomes easy to release energy by deforming the second layer to generate heat. On the other hand, an upper limit value of 70°C tan δ2/R is, but not particularly limited to, preferably 0.270 or less, more preferably 0.230 or less, further preferably 0.200 or less.

[Rubber composition]

In the tire according to the present embodiment, uneven-abrasion resistance can be improved by cooperation of the above-described configurations of the tire and the tread and the above-described physical properties of the rubber composition constituting each layer of the tread part. The rubber composition according to the present embodiment will be described below, though the description shall be applicable to any rubber layer of the tread part, unless otherwise noted.

<Rubber component>

The rubber composition according to the present embodiment preferably comprises, as a rubber component, at least one selected from the group consisting of an isoprene-based rubber, a styrene-butadiene rubber (SBR), and a butadiene rubber (BR), and more preferably comprises the isoprene-based rubber. These rubber components may be used alone, or two or more thereof may be used in combination. Furthermore, these rubber components may be modified rubbers each treated with a modified group that can interact with a filler such as carbon black, silica, and the like or may be hydrogenated rubbers for which hydrogeneration treatment is performed on a part of an unsaturated bond. Each of the rubber components constituting the first and second layers preferably comprises an isoprene-based rubber and more preferably comprises an isoprene-based rubber and BR.

(Isoprene-based rubber)

As the isoprene-based rubber, those common in the tire industry can be used, such as, for example, an isoprene rubber (IR), a natural rubber, and the like. Examples of the natural rubber include not only non-modified natural rubbers (NR) but also modified natural rubbers such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 20% by mass or more, more preferably 30% by mass or more, further preferably 40% by mass or more, particularly preferably 50% by mass or more, from the viewpoint of the effects of the present invention. Moreover, an upper limit value of the content can be, but not particularly limited to, for example, 100% by mass, 99% by mass or less, 95% by mass or less, 90% by mass or less, or 85% by mass or less.

(BR)

The BR is not particularly limited, and those common in the tire industry can be used, such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available form Zeon Corporation, Ube Industries, Ltd., JSR Corporation, etc. can be used. When the rubber composition comprises the high cis BR, abrasion resistance can be improved. A cis content of the high cis BR is preferably 95% by mass or more, more preferably 96% by mass or more, further preferably 97% by mass or more. Besides, the cis content of the BR is measured by the above-described measuring method.

As the modified BR, a modified butadiene rubber (modified BR) is appropriately used whose terminal and/or main chain are modified with a functional group including at least one element selected from the group consisting of silicon, nitrogen, and oxygen.

Examples of other modified BRs include those obtained by adding a tin compound after polymerizing 1,3-butadiene by a lithium initiator, a terminal of the modified BR molecule being further bonded by tin-carbon bond (tin-modified BRs), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity and the like. Besides, the Mw of the BR can be measured by the above-described measuring method.

A content of the BR in the rubber component is preferably 50% by mass or less, more preferably 40% by mass or less, further preferably 30% by mass or less, particularly preferably 25% by mass or less, from the viewpoint of the effects of the present invention. Moreover, a lower limit value of the content can be, but not limited to, for example, 1% by mass or more, 3% by mass or more, 5% by mass or more, or 7% by mass or more.

(SBR)

The SBR is not particularly limited, examples of which include a non-modified solution-polymerized SBR (S-SBR), a non-modified emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, the S-SBR and the modified SBR are preferable. Furthermore, hydrogenated ones of these SBRs (hydrogenated SBRs) and the like can also be used. These SBRs may be used alone, or two or more thereof may be used in combination.

An extended SBR or a non-extended SBR may be used as a SBR according to the present embodiment. When the extended SBR is used, an extending amount of the SBR, that is, a content of an extending softening agent in the SBR is preferably 10 to 50 parts by mass based on 100 parts by mass of a rubber solid content of the SBR.

The SBRs recited above may be used alone, or two or more thereof may be used in combination. As the SBRs recited above, for example, those commercially available from Sumitomo Chemical Co., JSR Corporation, Ltd., Asahi Kasei Corporation, Zeon Corporation, ZS Elastomer Co., Ltd., etc. can be used.

A styrene content of the SBR is preferably 40% by mass or less, more preferably 36% by mass or less, further preferably 32% by mass or less, particularly preferably 28% by mass or less. Moreover, the styrene content of the SBR is preferably 5% by mass or more, more preferably 7% by mass or more, further preferably 10% by mass or more. Besides, the styrene content of the SBR is measured by the above-described measuring method.

A weight-average molecular weight (Mw) of the SBR is preferably 100,000 or more, more preferably 200,000 or more, further preferably 300,000 or more, from the viewpoint of the effects of the present invention. Moreover, the weight-average molecular weight is preferably 2,000,000 or less, more preferably 1,800,000 or less, further preferably 1,500,000 or less, from the viewpoint of cross-linking uniformity. Besides, the weight-average molecular weight of the SBR is measured by the above-described measurement method.

A content of the SBR in the rubber component constituting the second layer is preferably 50% by mass or less, more preferably 40% by mass or less, further preferably 30% by mass or less, particularly preferably 20% by mass or less, although it can be appropriately selected, for example, such that a total styrene amount in the rubber component satisfies a range which will be described below. Moreover, a lower limit value of the content can be, but not particularly limited to, for example, 1% by mass or more, 3% by mass or more, 5% by mass or more, or 7% by mass or more. Besides, contents of the SBR in the rubber components constituting the first and third layers are not particularly limited.

The total styrene amount in the rubber component constituting the second layer is preferably less than 20% by mass, more preferably less than 16% by mass, further preferably less than 12% by mass, particularly preferably less than 8.0% by mass, from the viewpoint of the effects of the present invention. Moreover, a lower limit value of the total styrene amount in the rubber component constituting the second layer can be, but not particularly limited to, for example, greater than 1.0% by mass, greater than 2.0% by mass, or greater than 3.0% by mass. Besides, total styrene amounts in the rubber components constituting the first and third layers are not particularly limited.

(Other rubber components)

As the rubber component according to the present embodiment, the rubber composition may comprise a rubber component other than the above-described isoprene-based rubber, SBR, and BR. As another rubber component, a cross-linkable rubber component commonly used in the tire industry can be used, examples of which include a diene-based rubber other than the isoprene-based rubber, the SBR, and the BR, such as a styrene-isoprene rubber (SIR), a styrene-isoprene-butadiene rubber (SIBR), a chloroprene rubber (CR), an acrylonitrile-butadiene rubber (NBR), and the like; and a non-diene-based rubber, such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

The rubber component according to the present embodiment comprises preferably 80% by mass or more, more preferably 90% by mass or more, further preferably 95% by mass or more, particularly preferably 98% by mass or more of a diene-based rubber or may be a rubber component consisting of a diene-based rubber. Moreover, it may or may not comprise a known thermoplastic elastomer in addition to the above-described rubber component.

<Filler>

For the rubber composition according to the present embodiment, a filler comprising carbon black and/or silica is appropriately used. Each of the rubber compositions constituting the first layer and the second layer comprises, as a filler, preferably carbon black, more preferably carbon black and silica. The rubber composition constituting the third layer preferably comprises, as a filler, carbon black.

(Carbon black)

Carbon black is not particularly limited, and those common in the tire industry can be used, such as, for example, GPF, FEF, HAF, ISAF, SAF, and the like. Besides, in addition to carbon black generated by burning general mineral oil, carbon black in which a biomass material such as lignin and the like is used, may be used. These carbon black may be used alone, or two or more thereof may be used in combination.

A nitrogen adsorption specific surface area ($N_2SA$) of carbon black contained in the rubber composition constituting the first layer is preferably 70 $m^2/g$ or more, more preferably 90 $m^2/g$ or more, further preferably 110 $m^2/g$ or more, particularly preferably 130 $m^2/g$ or more, from the viewpoint of reinforcing property. Moreover, it is preferably 200 $m^2/g$ or less, more preferably 180 $m^2/g$ or less, further preferably 160 $m^2/g$ or less, from the viewpoints of fuel efficiency and processability. Besides, the $N_2SA$ of carbon black is measured by the above-described measuring method.

A nitrogen adsorption specific surface area ($N_2SA$) of carbon black contained in each of the rubber compositions constituting the second layer and the third layer is preferably 10 $m^2/g$ or more, more preferably 30 $m^2/g$ or more, further preferably 50 $m^2/g$ or more, from the viewpoint of reinforcing property. Moreover, it is preferably 200 $m^2/g$ or less, more

preferably 160 m$^2$/g or less, further preferably 120 m$^2$/g or less, from the viewpoints of fuel efficiency and processability.

A content of carbon black based on 100 parts by mass of the rubber component is preferably 5 parts by mass or more, more preferably 8 parts by mass or more, further preferably 15 parts by mass or more, particularly preferably 25 parts by mass or more, from the viewpoint of reinforcing property. Moreover, the content is preferably 90 parts by mass or less, more preferably 80 parts by mass or less, further preferably 70 parts by mass or less, particularly preferably 60 parts by mass or less.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable for the reason that it has many silanol groups. Besides, in addition to the above-described silica, silica made from a biomass material such as rice husks and the like may be appropriately used. These silica may be used alone, or two or more thereof may be used in combination.

A nitrogen adsorption specific surface area (N$_2$SA) of silica is preferably 120 m$^2$/g or more, more preferably 150 m$^2$/g or more, further preferably 170 m$^2$/g or more, from the viewpoints of fuel efficiency and abrasion resistance. Moreover, it is preferably 350 m$^2$/g or less, more preferably 300 m$^2$/g or less, further preferably 250 m$^2$/g or less, from the viewpoints of fuel efficiency and processability. Besides, the N$_2$SA of silica is measured by the above-described measuring method.

A content of silica based on 100 parts by mass of each of the rubber components of the rubber compositions constituting the first and second layers is preferably 3 parts by mass or more, more preferably 5 parts by mass or more, further preferably 10 parts by mass or more, particularly preferably 15 parts by mass or more, from the viewpoint of the effects of the present invention. Moreover, the content is preferably 90 parts by mass or less, more preferably 80 parts by mass or less, further preferably 70 parts by mass or less, particularly preferably 60 parts by mass or less. Besides, a content of silica based on 100 parts by mass of the rubber component of the rubber composition constituting the third layer is not particularly limited.

(Other fillers)

Fillers other than silica and carbon black are not particularly limited, and those conventionally and commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

A total content of fillers based on 100 parts by mass of the rubber component is preferably 25 parts by mass or more, more preferably 30 parts by mass or more, further preferably 35 parts by mass or more, particularly preferably 40 parts by mass or more. Moreover, the total content is preferably 150 parts by mass or less, more preferably 130 parts by mass or less, further preferably 110 parts by mass or less, particularly preferably 90 parts by mass or less.

A mass content ratio of silica to carbon black in the rubber composition constituting the second layer is preferably 0.30 or more, more preferably 0.40 or more, further preferably 0.50 or more, particularly preferably 0.75 or more, particularly preferably greater than 1.0. When silica is compounded in the second layer that is a middle rubber layer to improve elongation, shock received by a block can be mitigated, and it is considered that uneven-abrasion resistance is improved. Moreover, the mass content ratio is preferably 20 or less, more preferably 15 or less, further preferably 10 or less, particularly preferably 5.0 or less, from the viewpoint of the effects of the present invention. Besides, a mass content ratio of silica to carbon black in each of the rubber compositions constituting the first layer and the third layer is not particularly limited.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Momentive Performance Materials, etc. can be used. These silane coupling agents may be used alone, or two or more thereof may be used in combination.

A content of the silane coupling agent based on 100 parts by mass of silica preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<Other compounding agents>

The rubber composition according to the present embodiment can appropriately comprise compounding agents conventionally and commonly used in the tire industry, such as, for example, a softening agent, wax, stearic acid, zinc oxide, an antioxidant, a vulcanizing agent, a vulcanization accelerator, and the like, in addition to the above-described components.

Examples of the softening agent include, for example, a resin component, oil, a liquid polymer, and the like.

Examples of the resin component include, but not particularly limited to, hydrocarbon resins, such as a petroleum resin, a terpene-based resin, a rosin-based resin, a phenol-based resin, and the like, which are commonly used in the tire industry. These resin components may be used alone, or two or more thereof may be used in combination.

Examples of the petroleum resin include a C5-based petroleum resin, an aromatic petroleum resin, a C5-C9-based petroleum resin, and the like.

In the present specification, the "C5-based petroleum resin" means a resin obtained by polymerizing C5 fractions and may be those undergoing hydrogeneration or modification. Examples of C5 fractions include, for example, petroleum fractions having 4 to 5 carbon atoms, such as cyclopentadiene, pentene, pentadiene, isoprene, and the like. Dicyclopentadiene resin (DCPD resin) is appropriately used as a C5-based petroleum resin.

In the present specification, the "aromatic petroleum resin" means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, methylindene, and the like. As a specific example of the aromatic petroleum resin, for example, a coumarone-indene resin, a coumarone resin, an indene resin, and an aromatic vinyl-based resin are appropriately used. As the aromatic vinyl-based resin, a homopolymer of $\alpha$-methyl-styrene or styrene or a copolymer of $\alpha$-methylstyrene and styrene is preferable, and the copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, the "C5-C9-based petroleum resin" means a resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the terpene-based resin include a polyterpene resin consisting of at least one selected from terpene compounds such as $\alpha$-pinene, $\beta$-pinene, limonene, dipentene, and the like; an aromatic modified terpene resin made from a terpene compound described above and an aromatic compound; a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, $\alpha$-methylstyrene, vinyltoluene, divinyltoluene, and the like. Examples of the phenol-based compound from which the terpene phenol resin is made include, for example, phenol, bisphenol A, cresol, xylenol, and the like.

Examples of the rosin-based resin include, but not particularly limited to, for example, a natural resin rosin; a rosin-modified resin obtained by modifying it by hydrogenation, disproportionation, dimerization, or esterification, or the like; and the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of the rubber component with the filler. Besides, the softening point of the resin component is measured by the above-described measuring method.

A content of the resin component when compounded based on 100 parts by mass of the rubber component is preferably greater than 1.0 part by mass, more preferably greater than 1.5 parts by mass. Moreover, it is preferably less than 50 parts by mass, more preferably less than 40 parts by mass, further preferably less than 30 parts by mass, from the viewpoint of suppression of heat generation.

Examples of oil include, for example, process oils, vegetable oils and fats, animal oils and fats, and the like. Examples of the process oils include paraffinic process oils (mineral oils), naphthenic process oils, aromatic process oils, and the like. Specific examples of the process oils include, for example, MES (Mild Extract Solvated), DAE (Distillate Aromatic Extract), TDAE (Treated Distillate Aromatic Extract), TRAE (Treated Residual Aromatic Extract), RAE (Residual Aromatic Extract), and the like. Moreover, a process oil having a low content of a polycyclic aromatic compound (PCA) can also be used for environmental measures. Examples of the process oil having a low PCA content include the MES, the TDAE, a heavy naphthenic oil, and the like. Moreover, from the viewpoint of a life cycle assessment, one obtained by refining a waste oil after use for a rubber mixing machine or an engine or waste cooking oil used in a cooking facility may be used.

A content of oil when compounded based on 100 parts by mass of the rubber component is preferably greater than 1 part by mass, more preferably greater than 3 parts by mass, further preferably greater than 5 parts by mass, from the viewpoint of processability. Moreover, it is preferably less than 90 parts by mass, more preferably less than 70 parts by mass, further preferably less than 50 parts by mass, particularly preferably less than 30 parts by mass, from the viewpoint of abrasion resistance.

The liquid polymer is not particularly limited as long as it is a polymer in a liquid state at a normal temperature (25°C), examples of which include, for example, a liquid butadiene polymer (liquid BR), a liquid isoprene rubber polymer (liquid IR), a liquid styrene-butadiene copolymer (liquid SBR), a liquid styrene-isoprene rubber copolymer (liquid SIR), a copolymer including myrcene farnesene, and the like. These liquid polymers may be used alone, or two or more thereof may be used in combination.

A content of the liquid polymer when compounded based on 100 parts by mass of the rubber component is preferably greater than 1 part by mass, more preferably greater than 3 parts by mass, further preferably greater than 5 parts by mass. Moreover, the content of the liquid polymer is preferably less than 50 parts by mass, more preferably less than 40 parts by mass, further preferably less than 30 parts by mass.

A content of the softening agent based on 100 parts by mass of the rubber component (a total amount of all of a plurality of softening agents when used in combination) is, but not particularly limited to, preferably greater than 1.0 part by mass, more preferably greater than 1.5 parts by mass, further preferably greater than 2.0 parts by mass. Moreover, the content is preferably less than 90 parts by mass, more preferably less than 70 parts by mass, further preferably less than 50 parts by mass, particularly preferably less than 30 parts by mass.

The wax is not particularly limited, and any of those commonly used in the tire industry can be appropriately used, examples of which include, for example, a petroleum-based wax, a mineral-based wax, a synthetic wax, and the like. The petroleum-based wax is preferable. Examples of the petroleum-based wax include, for example, a paraffin wax, a microcrystalline wax, a selected special wax thereof, and the like. The paraffin wax is preferable. Besides, the wax according to the present embodiment shall not include stearic acid. As a wax, for example, those commercially available from Ouchi Shinko Chemical Industry Co., Nippon Seiro Co., Ltd., PARAMELT, etc. can be used. These waxes may be used alone, or two or more thereof may be used in combination.

A content of wax when compounded based on 100 parts by mass of the rubber component is preferably greater than 0.5 parts by mass, more preferably greater than 0.8 parts by mass, from the viewpoint of weather resistance of a rubber. Moreover, it is preferably less than 10 parts by mass, more preferably less than 5.0 parts by mass, from the viewpoint of prevention of whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt and the like, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and quinoline-based antioxidants such as 2,2,4-trimethyl-1,2-dihydroquinoline polymer, 6-ethoxy-2,2,4-trimethyl-1,2-dihydroquinoline, and the like. These antioxidants may be used alone, or two or more thereof may be used in combination.

A content of the antioxidant when compounded based on 100 parts by mass of the rubber component is preferably greater than 0.5 parts by mass, more preferably greater than 0.8 parts by mass, from the viewpoint of ozone crack resistance of a rubber. Moreover, it is preferably less than 10 parts by mass, more preferably less than 5.0 parts by mass, from the viewpoint of abrasion resistance.

A content of stearic acid when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10 parts by mass, more preferably less than 5.0 parts by mass, from the viewpoint of vulcanization rate.

A content of zinc oxide when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10 parts by mass, more preferably less than 5.0 parts by mass, from the viewpoint of abrasion resistance.

Sulfur is appropriately used as a vulcanizing agent. As sulfur, a powdered sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably greater than 0.1 parts by mass, more preferably greater than 0.5 parts by mass, further preferably greater than 1.0 part by mass, from the viewpoint of securing a sufficient vulcanization reaction. Moreover, it is preferably less than 5.0 parts by mass, more preferably less than 4.0 parts by mass, further preferably less than 3.5 parts by mass, from the viewpoint of prevention of deterioration. Besides, a content of the vulcanizing agent in a case where an oil-containing sulfur is used as the vulcanizing agent shall be a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination. Among them, from the viewpoint that the desired effects can be more appropriately obtained, one or more vulcanization accelerators selected from the group consisting of the sulfenamide-based vulcanization accelerator, the thiazole-based vulcanization accelerator, and the guanidine-based vulcanization accelerator are preferable, and the sulfenamide-based vulcanization accelerator and the guanidine-based vulcanization accelerator are more preferably used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl) mercaptobenzothiazole, 2-(2,6-diethyl-4-morpholinothio) benzothiazole, and the like. Among them, the MBTS and MBT are preferable, and the MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, DPG is preferable.

A content of the vulcanization accelerator when compounded based on 100 parts by mass of the rubber component is preferably greater than 0.5 parts by mass, more preferably greater than 1.0 part by mass, further preferably greater than 1.5 parts by mass. Moreover, the content of the vulcanization accelerator based on 100 parts by mass of the rubber component is preferably less than 8.0 parts by mass, more preferably less than 6.0 parts by mass, further preferably less than 4.0 parts by mass. When the content of the vulcanization accelerator is within the above-described ranges, there is a tendency to be able to secure breaking strength and elongation.

[Production of rubber composition and tire]

The rubber composition according to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire comprising the tread including the first layer 11, the second layer 12, and the third layer 13 can be produced using the above-described rubber compositions by a usual method. That is, the tire can be produced by extruding unvulcanized rubber compositions, in which the above-described components are compounded for rubber components as appropriate, into shapes of the first layer 11, the second layer 12, and the third layer 13 with an extruder equipped with a mouthpiece having a predetermined shape, attaching them together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

[Application of tire]

The tire according to the present embodiment can be appropriately used as a heavy duty tire. Besides, the heavy duty tire refers to a tire that is presupposed to be mounted to a vehicle running with four wheels and that has a maximum load capacity of 1000 kg or more. The maximum load capacity of the heavy duty tire is preferably 1200 kg or more, more preferably 1400 kg or more.

EXAMPLES

Hereinafter, examples considered to be preferable in implementing the present invention (Examples) will be described, though the scope of the present invention is not limited to these Examples only. Heavy duty tires are examined, each comprising a first layer, a second layer, and a third layer of a tread part obtained using various chemicals described below in accordance with compounding formulations of Table 1, and results calculated based on evaluation methods described below are shown in Tables 2 and 3.

Various chemicals used in Examples and Comparative examples are collectively shown below.

NR: TSR 20
SBR: SBR1502 manufactured by JSR Corporation (unmodified E-SBR, styrene content: 23.5% by mass, Mw: 440,000, non-oil extended product)
BR: Ubepol BR (Registered Trademark) 150B manufactured by Ube Industries, Ltd. (unmodified BR, cis content: 97 mol%, Mw: 440,000)
Carbon black 1: VULCAN 10H manufactured by Cabot Japan K.K. (N134, $N_2SA$: 144 $m^2/g$)
Carbon black 2: SHOW BLACK N220 manufactured by Cabot Japan K.K. ($N_2SA$: 111 $m^2/g$)
Carbon black 3: SHOW BLACK N330 manufactured by Cabot Japan K.K., ($N_2SA$: 75 $m^2/g$)
Silica: Ultrasil (Registered Trademark) VN3 manufactured by Evonik Degussa GmbH ($N_2SA$: 175 $m^2/g$)
Silane coupling agent: Si266 manufactured by Evonik Degussa GmbH (bis(3-triethoxysilylpropyl)disulfide)
Oil: DIANA PROCESS NH-70S manufactured by Idemitsu Kosan Co., Ltd. (aromatic process oil)
Resin component: Sylvatraxx (Registered Trademark) 4401 manufactured by Kraton Corporation (copolymer of α-methylstyrene and styrene, softening point: 85°C)
Wax: OZOACE 0355 manufactured by Nippon Seiro Co., Ltd. (paraffin wax)
Antioxidant: Nocrac 6C manufactured by Ouchi Shinko Chemical Industry Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Zinc oxide No. 2 manufactured by Mitsui Mining & Smelting Co., Ltd.
Sulfur: HK-200-5 manufactured by Hosoi Chemical Industry Co., Ltd. (5% oil-containing powdered sulfur)
Vulcanization accelerator 1: Nocceler NS manufactured by Ouchi Shinko Chemical Industry Co., Ltd. (N-tert-butyl-2-benzothiazolyl sulfenamide (TBBS))
Vulcanization accelerator 2: Nocceler D manufactured by Ouchi Shinko Chemical Industry Co., Ltd. (1,3-diphenylguanidine (DPG))

(Examples and Comparative examples)

According to the compounding formulations shown in Table 1, using a 1.7 L closed Banbury mixer, chemicals other than sulfur and a vulcanization accelerator are kneaded for 1 to 10 minutes until a temperature reaches a discharge temperature of 150 to 160°C, to obtain a kneaded product. Next, using a twin-screw open roll, sulfur and the vulcanization accelerator are added to the kneaded product, and the mixture is kneaded for 4 minutes until the temperature reaches 105°C, to obtain unvulcanized rubber compositions. The unvulcanized rubber compositions are molded into shapes of a first layer, a second layer (thicknesses: 10 mm), and a third layer (thickness: 3 mm) of a tread and attached together with other tire members to produce an unvulcanized tire, and the unvulcanized tire is vulcanized at 150°C, thereby obtaining each test tire listed in Table 2 and Table 3. Besides, the groove widths W1 of circumferential grooves are set to be 5mm and a total amount of recession of the circumferential grooves is set to be 2 mm.

<Measurement of tan δ>

For each vulcanized rubber test piece prepared to have a length of 20 mm, a width of 4 mm, and a thickness of 1 mm by being cut out from an inner side of each rubber layer of a tread part of each test tire such that a tire circumferential direction becomes a long side and a tire radial direction becomes a thickness direction, a tan δ is measured using a dynamic viscoelasticity measuring apparatus (EPLEXOR series manufactured by gabo Systemtechnik GmbH) under a condition of a temperature at 70°C, a frequency of 10 Hz, an initial strain of 10%, a dynamic strain of 1%, and an extension mode.

<Tensile test>

For a No 7. dumbbell-shaped test piece having a thickness of 1 mm which is cut out from the inner side of each rubber layer of the tread part of each test tire such that the tire circumferential direction becomes a tensile direction and the tire radial direction becomes a thickness direction, a tensile test is performed in accordance with JIS K 6251: 2017 under an atmosphere at 23°C under a condition of a tension rate of 3.3 mm/sec, and each of elongation at break EB (%) and a modulus at 200% elongation (MPa) is measured.

<Measurement of rubber hardness (Hs)>

For each vulcanized rubber test piece prepared by being cut out from the inner side of a first layer of the tread part of each test tire such that the tire radial direction becomes a thickness direction, a Shore hardness (Hs) at 23°C of each rubber test piece is measured in accordance with JIS K 6253-3:2012 using a type A durometer.

<Uneven-abrasion resistance>

Each test tire is mounted on all wheels of a truck (2-D vehicle) with a maximum loading capacity of 10 tons. After the truck is made run for 10000 km at an average speed of 80 km/hour on a test course with a dry asphalt road surface, a difference between amounts of abrasion on both sides of each of a center block, a middle block, and a shoulder block of a rear wheel in a tire circumferential direction is measured. In the measurement, for each block, eight blocks having an approximately equal pitch in the tire circumferential direction are used and an average value of all measurement values are calculated. Additionally, measurement results are indicated as indexes by the following calculation equation. The results show that the larger the index is, the better the uneven-abrasion resistance is. Besides, control tires are Comparative example 3 in Table 2 and Comparative example 10 in Table 3.

(Uneven-abrasion resistance index) = (Difference between amounts of abrasion of control tire)/(Difference between amounts of abrasion of each test tire) × 100

Table 1

| | Rubber layer | | | | | | | | | | |
|---|---|---|---|---|---|---|---|---|---|---|---|
| | 1 | 2 | 3 | 4 | 5 | 6 | 7 | 8 | 9 | 10 | 11 |
| Compounding amount (part by mass) | | | | | | | | | | | |
| NR | 80 | 70 | 80 | 90 | 70 | 50 | 70 | 50 | 80 | 90 | 100 |
| SBR | - | - | - | - | 15 | 30 | - | 30 | - | - | - |
| BR | 20 | 30 | 20 | 10 | 15 | 20 | 30 | 20 | 20 | 10 | - |
| Compounding amount (part by mass) | | | | | | | | | | | |
| Carbon black 1 | 35 | 20 | - | 48 | | | - | 53 | 26 | - | 8 | - |
| Carbon black 2 | - | 30 | 48 | - | 50 | 55 | - | - | 10 | - | - |
| Carbon black 3 | - | - | - | - | - | - | - | - | - | - | 42 |
| Silica | 15 | - | - | 5 | - | - | - | 35 | 45 | 40 | - |
| Silane coupling agent | 1.5 | - | - | - | - | - | - | 3.5 | 4.5 | 0.4 | - |
| Compounding amount (part by mass) | | | | | | | | | | | |
| Oil | 0.5 | 0.5 | 0.5 | 0.5 | 0.5 | 0.5 | 0.5 | 0.5 | 0.5 | 0.5 | 0.5 |

(continued)

| Compounding amount (part by mass) | | | | | | | | | | | |
|---|---|---|---|---|---|---|---|---|---|---|---|
| Resin compound | 2.0 | 2.0 | 2.0 | 2.0 | 2.0 | 2.0 | 2.0 | 2.0 | 2.0 | 2.0 | 2.0 |
| Wax | 1.0 | 1.0 | 1.0 | 1.0 | 1.0 | 1.0 | 1.0 | 1.0 | 1.0 | 1.0 | - |
| Antioxidant | 2.0 | 2.0 | 2.0 | 2.0 | 2.0 | 2.0 | 2.0 | 2.0 | 2.0 | 2.0 | 1.0 |
| Stearic acid | 3.0 | 3.0 | 3.0 | 3.0 | 3.0 | 3.0 | 3.0 | 3.0 | 3.0 | 3.0 | 2.0 |
| Zinc oxide | 3.0 | 3.0 | 3.0 | 3.0 | 3.0 | 3.0 | 3.0 | 3.0 | 3.0 | 3.0 | 2.0 |
| Sulfur | 1.0 | 1.0 | 1.0 | 1.3 | 1.0 | 1.0 | 1.0 | 1.0 | 1.9 | 1.9 | 1.6 |
| Vulcanization accelerator 1 | 1.3 | 1.5 | 1.5 | 1.5 | 1.5 | 1.2 | 1.0 | 1.0 | 1.9 | 1.9 | 1.2 |
| Vulcanization accelerator 2 | 0.20 | - | - | - | | - | - | 0.55 | 0.70 | 0.70 | - |
| Total styrene amount (% by mass) | 0 | 0 | 0 | 0 | 3.5 | 7.1 | 0 | 7.1 | 0 | 0 | 0 |
| Shore hardness (Hs) | 63 | N.T. | 63 | 66 | N.T. | N.T. | N.T. | N.T. | N.T. | N.T. | 57 |
| 70°C tan δ | 0.09 | 0.11 | 0.10 | 0.09 | 0.12 | 0.15 | 0.14 | 0.13 | 0.06 | 0.08 | 0.06 |
| Modulus (MPa) | 7.9 | 9.7 | 8.6 | 9.7 | 9.7 | 9.7 | 8.5 | 8.5 | 9.2 | 7.9 | 6.5 |
| EB (%) | 563 | 490 | 460 | 464 | 490 | 450 | 500 | 504 | 500 | 520 | 610 |

N.T.: Not tested

Table 2: Test tire 1 (size: 215/70R17.5, rim: 17.5 × 6.75)

| | Example | | | | | | | | |
|---|---|---|---|---|---|---|---|---|---|
| | 1 | 2 | 3 | 4 | 5 | 6 | 7 | 8 | 9 |
| First layer | A3 | A3 | A1 | A1 | A4 | A4 | A4 | A4 | A4 |
| Second layer | A2 | A5 | A5 | A5 | A5 | A6 | A7 | A8 | A8 |
| Third layer | A11 | A11 | A11 | A11 | A11 | A11 | A11 | A11 | A11 |
| First layer | | | | | | | | | |
| Shore hardness (Hs) | 63 | 63 | 63 | 63 | 66 | 66 | 66 | 66 | 66 |
| 70°C tan δ1 | 0.10 | 0.10 | 0.09 | 0.09 | 0.09 | 0.09 | 0.09 | 0.09 | 0.09 |
| M1 (MPa) | 8.6 | 8.6 | 7.9 | 7.9 | 9.7 | 9.7 | 9.7 | 9.7 | 9.7 |
| EB1 (%) | 460 | 460 | 563 | 563 | 464 | 464 | 464 | 464 | 464 |
| Second layer | | | | | | | | | |
| Total styrene amount (% by mass) | 0 | 3.5 | 3.5 | 3.5 | 3.5 | 7.1 | 0 | 7.1 | 7.1 |
| 70°C tan δ2 | 0.11 | 0.12 | 0.12 | 0.12 | 0.12 | 0.15 | 0.14 | 0.13 | 0.13 |
| M2 (MPa) | 9.7 | 9.7 | 9.7 | 9.7 | 9.7 | 9.7 | 8.5 | 8.5 | 8.5 |
| EB2 (%) | 490 | 490 | 490 | 490 | 490 | 450 | 500 | 504 | 504 |
| Third layer | | | | | | | | | |
| 70°C tan δ3 | 0.06 | 0.06 | 0.06 | 0.06 | 0.06 | 0.06 | 0.06 | 0.06 | 0.06 |
| Tire | | | | | | | | | |
| Dt (mm) | 0.746 | 0.746 | 0.746 | 0.746 | 0.746 | 0.746 | 0.746 | 0.746 | 0.746 |
| t1 (mm) | 14.0 | 14.0 | 14.0 | 14.0 | 14.0 | 14.0 | 14.0 | 14.0 | 8.0 |
| H (mm) | 18.0 | 18.0 | 18.0 | 18.0 | 18.0 | 18.0 | 18.0 | 18.0 | 18.0 |
| t1/H | 0.78 | 0.78 | 0.78 | 0.78 | 0.78 | 0.78 | 0.78 | 0.78 | 0.44 |
| Land ratio R | 0.80 | 0.80 | 0.75 | 0.80 | 0.80 | 0.80 | 0.80 | 0.80 | 0.80 |
| Cross section of circumferential groove | FIG. 2 | FIG. 2 | FIG. 2 | FIG. 2 | FIG. 2 | FIG. 2 | FIG. 2 | FIG. 2 | FIG. 3 |
| L (mm) | 0 | 0 | 0 | 0 | 0 | 0 | 0 | 0 | 10.0 |

(continued)

| Tire | | | | | | | | | |
|---|---|---|---|---|---|---|---|---|---|
| 70°C tan δ1/70°C tan δ2 | 0.91 | 0.83 | 0.75 | 0.75 | 0.75 | 0.60 | 0.64 | 0.69 | 0.69 |
| 70°C tan δ2/70°C tan δ3 | 1.8 | 2.0 | 2.0 | 2.0 | 2.0 | 2.5 | 2.3 | 2.2 | 2.2 |
| 70°C tan δ2/Dt | 0.15 | 0.16 | 0.16 | 0.16 | 0.16 | 0.20 | 0.19 | 0.17 | 0.17 |
| 70°C tan δ1/R | 0.125 | 0.125 | 0.120 | 0.113 | 0.113 | 0.113 | 0.113 | 0.113 | 0.113 |

| | Example | | | | | | | | |
|---|---|---|---|---|---|---|---|---|---|
| | 1 | 2 | 3 | 4 | 5 | 6 | 7 | 8 | 9 |
| 70°C tan δ2/R | 0.138 | 0.150 | 0.160 | 0.150 | 0.150 | 0.188 | 0.175 | 0.163 | 0.163 |
| Uneven-abrasion resistance | 118 | 125 | 135 | 139 | 147 | 156 | 162 | 167 | 172 |

| | Comparative example | | | | | | | |
|---|---|---|---|---|---|---|---|---|
| | 1 | 2 | 3 | 4 | 5 | 6 | 7 | 8 |
| First layer | A3 | A3 | A3 | A3 | A3 | A3 | A3 | A3 |
| Second layer | A11 | A11 | A4 | A9 | A4 | A9 | A2 | A2 |
| Third layer | - | - | A11 | A11 | A11 | A11 | A11 | - |
| **First layer** | | | | | | | | |
| Shore hardness (Hs) | 63 | 63 | 63 | 63 | 63 | 63 | 63 | 63 |
| 70°C tan δ1 | 0.10 | 0.10 | 0.10 | 0.10 | 0.10 | 0.10 | 0.10 | 0.10 |
| M1 (MPa) | 8.6 | 8.6 | 8.6 | 8.6 | 8.6 | 8.6 | 8.6 | 8.6 |
| EB1 (%) | 460 | 460 | 460 | 460 | 460 | 460 | 460 | 460 |
| **Second layer** | | | | | | | | |
| Total styrene amount (% by mass) | 0 | 0 | 0 | 0 | 0 | 0 | 0 | 0 |
| 70°C tan δ2 | 0.06 | 0.06 | 0.09 | 0.06 | 0.09 | 0.06 | 0.11 | 0.11 |
| M2 (MPa) | 6.5 | 6.5 | 9.7 | 9.2 | 9.7 | 9.2 | 9.7 | 9.7 |
| EB2 (%) | 610 | 610 | 464 | 500 | 464 | 500 | 490 | 490 |
| **Third layer** | | | | | | | | |
| 70°C tan δ3 | - | - | 0.06 | 0.06 | 0.06 | 0.06 | 0.06 | - |
| **Tire** | | | | | | | | |
| Dt (mm) | 0.746 | 0.746 | 0.746 | 0.746 | 0.746 | 0.746 | 0.746 | 0.746 |
| t1 (mm) | 20.0 | 14.0 | 14.0 | 20.0 | 20.0 | 14.0 | 20.0 | 14.0 |
| H (mm) | 18.0 | 18.0 | 18.0 | 18.0 | 18.0 | 18.0 | 18.0 | 18.0 |
| t1/H | 1.11 | 0.78 | 0.78 | 1.11 | 1.11 | 0.78 | 1.11 | 0.78 |
| Land ratio R | 0.80 | 0.80 | 0.80 | 0.80 | 0.80 | 0.80 | 0.80 | 0.80 |
| Cross section of circumferential groove | FIG. 2 | FIG. 2 | FIG. 2 | FIG. 2 | FIG. 2 | FIG. 2 | FIG. 2 | FIG. 2 |
| L (mm) | 0 | 0 | 0 | 0 | 0 | 0 | 0 | 0 |
| 70°C tan δ1/70°C tan δ2 | 1.67 | 1.67 | 1.11 | 1.67 | 1.11 | 1.67 | 0.91 | 0.91 |
| 70°C tan δ2/70°C tan δ3 | - | - | 1.5 | 1.0 | 1.5 | 1.0 | 1.8 | - |
| 70°C tan δ2/Dt | 0.08 | 0.08 | 0.12 | 0.08 | 0.12 | 0.08 | 0.15 | 0.15 |

(continued)

| Tire | | | | | | | | |
|---|---|---|---|---|---|---|---|---|
| 70°C tan $\delta$1/R | 0.125 | 0.125 | 0.125 | 0.125 | 0.125 | 0.125 | 0.125 | 0.125 |
| 70°C tan $\delta$2/R | - | - | 0.113 | 0.075 | 0.113 | 0.113 | 0.138 | 0.138 |
| Uneven-abrasion resistance | 78 | 84 | 100 | 80 | 88 | 85 | 92 | 95 |

Table 3: Test tire 2 (size: 295/70R22.5, rim: 22.5 × 8.25)

| | Example | | | | Comparative example | | | |
|---|---|---|---|---|---|---|---|---|
| | 10 | 11 | 12 | 13 | 9 | 10 | 11 | 12 |
| First layer | A3 | A1 | A4 | A4 | A3 | A3 | A3 | A11 |
| Second layer | A2 | A5 | A8 | A8 | A2 | A4 | A2 | A10 |
| Third layer | A11 | A11 | A11 | A11 | - | A11 | A11 | A11 |
| **First layer** | | | | | | | | |
| Shore hardness (Hs) | 63 | 63 | 66 | 66 | 63 | 63 | 63 | 57 |
| 70°C tan $\delta$1 | 0.10 | 0.09 | 0.09 | 0.09 | 0.10 | 0.10 | 0.10 | 0.06 |
| M1 (MPa) | 8.6 | 7.9 | 9.7 | 9.7 | 8.6 | 8.6 | 8.6 | 6.5 |
| EB1 (%) | 460 | 563 | 464 | 464 | 460 | 460 | 460 | 610 |
| **Second layer** | | | | | | | | |
| Total styrene amount (% by mass) | 0 | 3.5 | 7.1 | 7.1 | 0 | 0 | 0 | 0 |
| 70°C tan $\delta$2 | 0.11 | 0.12 | 0.13 | 0.13 | 0.11 | 0.09 | 0.11 | 0.08 |
| M2 (MPa) | 9.7 | 9.7 | 8.5 | 8.5 | 9.7 | 9.7 | 9.7 | 7.9 |
| EB2 (%) | 490 | 490 | 504 | 504 | 490 | 464 | 490 | 520 |
| **Third layer** | | | | | | | | |
| 70°C tan $\delta$3 | 0.06 | 0.06 | 0.06 | 0.06 | - | 0.06 | 0.06 | 0.06 |
| **Tire** | | | | | | | | |
| Dt (mm) | 0.985 | 0.985 | 0.985 | 0.985 | 0.985 | 0.985 | 0.985 | 0.985 |
| t1 (mm) | 14.0 | 14.0 | 14.0 | 14.0 | 14.0 | 14.0 | 20.0 | 20.0 |
| H (mm) | 18.0 | 18.0 | 18.0 | 18.0 | 18.0 | 18.0 | 18.0 | 18.0 |
| t1/H | 0.78 | 0.78 | 0.78 | 0.78 | 0.78 | 0.78 | 1.11 | 0.78 |
| Land ratio R | 0.80 | 0.80 | 0.80 | 0.80 | 0.80 | 0.80 | 0.80 | 0.80 |
| Cross section of circumferential groove | FIG. 2 | FIG. 2 | FIG. 2 | FIG. 3 | FIG. 2 | FIG. 2 | FIG. 2 | FIG. 2 |
| L (mm) | 0 | 0 | 0 | 10.0 | 0 | 0 | 0 | 0 |
| 70°C tan $\delta$1/70°C tan $\delta$2 | 0.91 | 0.75 | 0.69 | 0.69 | 0.91 | 1.11 | 0.91 | 0.75 |
| 70°C tan $\delta$2/70°C tan $\delta$3 | 1.8 | 2.0 | 2.2 | 2.2 | - | 1.5 | 1.8 | 1.3 |
| 70°C tan $\delta$2/Dt | 0.11 | 0.12 | 0.13 | 0.13 | 0.11 | 0.09 | 0.11 | 0.08 |
| 70°C tan $\delta$1/R | 0.125 | 0.113 | 0.113 | 0.113 | 0.125 | 0.125 | 0.125 | 0.075 |

| | Example | | | | Comparative example | | | |
|---|---|---|---|---|---|---|---|---|
| | 10 | 11 | 12 | 13 | 9 | 10 | 11 | 12 |
| 70°C tan $\delta$2/R | 0.138 | 0.150 | 0.163 | 0.163 | 0.138 | 0.113 | 0.138 | 0.100 |
| Uneven-abrasion resistance | 122 | 146 | 176 | 183 | 93 | 100 | 88 | 73 |

REFERENCE SIGNS LIST

1 Tread part
2 Groove edge
3 Center circumferential groove
4. Middle circumferential groove
5 Shoulder circumferential groove
6 Center land part
7 Middle land part
8 Shoulder land part
9 Recessed part
10 Groove wall
11 First layer
12 Second layer
13 Third layer
14 Tread surface
19 Center lateral groove
20 Middle lateral groove
21 Shoulder lateral groove
22 Center sipe
Te Grounding end

**Claims**

1. A heavy duty tire comprising a tread part (1),

   wherein the tread part (1) comprises a plurality of circumferential grooves (3, 4, 5) extending continuously in a tire circumferential direction,
   wherein the tread part (1) at least comprises

   a first layer (11) constituting a tread surface (14),
   a second layer (12) adjacent to the inner side of the first layer (11) in a tire radial direction, and
   a third layer (13) present on the inner side of the second layer (12) in the tire radial direction,

   wherein the first layer (11), the second layer (12), and the third layer (13) are composed of rubber compositions each comprising a rubber component,
   **characterized in that**,
   when a $\tan \delta$ at 70°C of the rubber composition constituting the first layer (11) is defined as 70°C $\tan \delta 1$, and a $\tan \delta$ at 70°C of the rubber composition constituting the second layer (12) is defined as 70°C $\tan \delta 2$, 70°C $\tan \delta 1$/70°C $\tan \delta 2$ is less than 1.0, preferably less than 0.95, more preferably less than 0.90, further preferably greater than 0.40 and less than 0.85, and
   when a tire outer diameter is defined as Dt, in m, a thickness of the first layer is defined as t1, in mm, and a groove depth at a deepest part of the circumferential grooves (3, 4, 5) is defined as H, in mm, 70°C $\tan \delta 2$/Dt is greater than 0.09, preferably greater than 0.10, more preferably greater than 0.12, further preferably greater than 0.14 and less than 0.24, and t1/H is 0.90 or less;
   wherein a "70°C $\tan \delta$" is a loss tangent measured under a condition of a temperature at 70°C, a frequency of 10 Hz, an initial strain of 10%, a dynamic strain of 1%, and an extension mode.

2. The heavy duty tire of claim 1, wherein 70°C $\tan \delta 2$ is greater than 0.11.

3. The heavy duty tire of claim 1 or 2, wherein 70°C $\tan \delta 1$ is less than 0.10.

4. The heavy duty tire of any one of claims 1 to 3, wherein, when a land ratio in a grounding surface of the tread part (1) is defined as R, 70°C $\tan \delta 1$/R is less than 0.120.

5. The heavy duty tire of any one of claims 1 to 4, wherein a Shore hardness (Hs) of the first layer (11), measured in accordance with JIS K 6253-3:2012 using a type A durometer under a condition of a temperature at 23°C, is 65 or more.

6. The heavy duty tire of any one of claims 1 to 5, wherein, when a land ratio in a grounding surface of the tread part (1) is defined as R, 70°C tan $\delta$2/R is 0.165 or more.

7. The heavy duty tire of any one of claims 1 to 6, wherein a modulus M2 at 200% elongation of the rubber composition constituting the second layer (12) is 9.0 MPa or less.

8. The heavy duty tire of any one of claims 1 to 7, wherein a mass content ratio of silica to carbon black in the rubber composition constituting the second layer (12) is 0.50 or more.

9. The heavy duty tire of any one of claims 1 to 8, wherein elongation at break EB2 of the rubber composition constituting the second layer (12) is 500% or more.

10. The heavy duty tire of any one of claims 1 to 9, wherein the rubber component constituting the first layer (11) comprises an isoprene-based rubber.

11. The heavy duty tire of any one of claims 1 to 10, wherein a total styrene amount in the rubber component constituting the second layer (12) is less than 20% by mass, preferably less than 16% by mass, more preferably less than 12% by mass, further preferably less than 8.0% by mass.

12. The heavy duty tire of any one of claims 1 to 11, wherein, when a tan $\delta$ at 70°C of the rubber composition constituting the third layer (13) is defined as 70°C tan $\delta$3, 70°C tan $\delta$2/70°C tan $\delta$3 is greater than 1.0, preferably greater than 1.2, more preferably greater than 1.4, further preferably greater than 1.6 and less than 4.0.

13. The heavy duty tire of any one of claims 1 to 12, wherein H is greater than 10 mm and less than 20 mm.

14. The heavy duty tire of any one of claims 1 to 13, wherein at least one groove wall (10) of each circumferential groove (3, 4, 5) is provided with a recessed part (9) that is recessed outward in a groove width direction from a groove edge (2) appearing on a grounding face of the tread part (1).

15. The heavy duty tire of claim 14, wherein a distance, from an end on the outer side of the recessed part (9) in the tire radial direction to the tread surface (14), of the circumferential groove (3, 4, 5) having a recessed part (9) that is recessed outward in the groove width direction from the groove edge (2) appearing on the grounding face of the tread part (1) provided on the groove wall (10) is defined as L, L/t1 is greater than 1.0.

**Patentansprüche**

1. Schwerlastreifen, umfassend einen Laufstreifenteil (1),

   wobei der Laufstreifenteil (1) eine Mehrzahl an Umfangsrillen (3, 4, 5) umfasst, die sich durchgehend in einer Reifenumfangsrichtung erstrecken,
   wobei der Laufstreifenteil (1) mindestens umfasst:

   eine erste Schicht (11), die eine Laufstreifenoberfläche (14) bildet,
   eine zweite Schicht (12), die zu der inneren Seite der ersten Schicht (11) in einer Reifenradialrichtung benachbart ist, und
   eine dritte Schicht (13), die auf der inneren Seite der zweiten Schicht (12) in der Reifenradialrichtung vorhanden ist,

   wobei die erste Schicht (11), die zweite Schicht (12) und die dritte Schicht (13) mit Kautschukzusammensetzungen aufgebaut sind, die jeweils eine Kautschukkomponente umfassen,
   **dadurch gekennzeichnet, dass**,
   wenn ein tan $\delta$ bei 70°C der Kautschukzusammensetzung, welche die erste Schicht (11) bildet, als 70°C tan $\delta$1 definiert ist, und ein tan $\delta$ bei 70°C der Kautschukzusammensetzung, welche die zweite Schicht (12) bildet, als 70°C tan $\delta$2 definiert ist, 70°C tan $\delta$1/70°C tan $\delta$2 kleiner als 1,0 ist, bevorzugt kleiner als 0,95, bevorzugter kleiner als 0,90, weiter bevorzugt größer als 0,40 und kleiner als 0,85, und

wenn ein Reifenaußendurchmesser als Dt, in m, definiert ist, eine Dicke der ersten Schicht als t1, in mm, definiert ist, und eine Rillentiefe bei einem tiefsten Teil der Umfangsrillen (3, 4, 5) als H, in mm, definiert ist, 70°C tan δ2/Dt größer als 0,09 ist, bevorzugt größer als 0,10, bevorzugter größer als 0,12, weiter bevorzugt größer als 0,14 und kleiner als 0,24, und t1/H 0,90 oder weniger ist;

wobei ein "70°C tan δ" ein Verlusttangens ist, der unter Bedingungen einer Temperatur bei 70°C, einer Frequenz von 10 Hz, einer anfänglichen Dehnung von 10%, einer dynamischen Dehnung von 1% und eines Streckungsmodus gemessen ist.

2. Schwerlastreifen nach Anspruch 1, wobei 70°C tan δ2 größer als 0,11 ist.

3. Schwerlastreifen nach Anspruch 1 oder 2, wobei 70°C tan δ1 kleiner als 0,10 ist.

4. Schwerlastreifen nach einem der Ansprüche 1 bis 3, wobei, wenn ein Positivprofilanteil in einer Bodenkontaktoberfläche des Laufstreifenteils (1) als R definiert ist, 70°C tan δ1/R kleiner als 0,120 ist.

5. Schwerlastreifen nach einem der Ansprüche 1 bis 4, wobei eine Shore-Härte (Hs) der ersten Schicht (11), gemessen gemäß JIS K 6253-3:2012 unter Verwendung eines Typ-A-Durometers unter einer Bedingung einer Temperatur bei 23°C, 65 oder mehr beträgt.

6. Schwerlastreifen nach einem der Ansprüche 1 bis 5, wobei, wenn ein Positivprofilanteil in einer Bodenkontaktoberfläche des Laufstreifenteils (1) als R definiert ist, 70°C tan δ2/R 0,165 oder mehr beträgt.

7. Schwerlastreifen nach einem der Ansprüche 1 bis 6, wobei ein Modul M2 bei 200% Dehnung der Kautschukzusammensetzung, welche die zweite Schicht (12) bildet, 9,0 MPa oder weniger beträgt.

8. Schwerlastreifen nach einem der Ansprüche 1 bis 7, wobei ein Massengehaltsverhältnis von Siliziumdioxid zu Ruß in der Kautschukzusammensetzung, welche die zweite Schicht (12) bildet, 0,50 oder mehr beträgt.

9. Schwerlastreifen nach einem der Ansprüche 1 bis 8, wobei eine Bruchdehnung EB2 der Kautschukzusammensetzung, welche die zweite Schicht (12) bildet, 500% oder mehr beträgt.

10. Schwerlastreifen nach einem der Ansprüche 1 bis 9, wobei die Kautschukkomponente, welche die erste Schicht (11) bildet, einen Isoprenbasierten Kautschuk umfasst.

11. Schwerlastreifen nach einem der Ansprüche 1 bis 10, wobei eine Gesamtstyrolmenge in der Kautschukkomponente, welche die zweite Schicht (12) bildet, kleiner als 20 Massen-% ist, bevorzugt kleiner als 16 Massen-%, bevorzugter kleiner als 12 Massen-%, weiter bevorzugt kleiner als 8,0 Massen-%.

12. Schwerlastreifen nach einem der Ansprüche 1 bis 11, wobei, wenn ein tan δ bei 70°C der Kautschukzusammensetzung, welche die dritte Schicht (13) bildet, als 70°C tan δ3 definiert ist, 70°C tan δ2/70°C tan δ3 größer als 1,0 ist, bevorzugt größer als 1,2, bevorzugter größer als 1,4, weiter bevorzugt größer als 1,6 und kleiner als 4,0.

13. Schwerlastreifen nach einem der Ansprüche 1 bis 12, wobei H größer als 10 mm und kleiner als 20 mm ist.

14. Schwerlastreifen nach einem der Ansprüche 1 bis 13, wobei mindestens eine Rillenwand (10) jeder Umfangsrille (3, 4, 5) mit einem vertieften Teil (9) versehen ist, der von einer Rillenkante (2) aus, die auf einer Bodenkontaktfläche des Laufstreifenteils (1) erscheint, in einer Rillenbreitenrichtung nach außen vertieft ist.

15. Schwerlastreifen nach Anspruch 14, wobei ein Abstand, von einem Ende auf der äußeren Seite des vertieften Teils (9) in der Reifenradialrichtung zu der Laufstreifenoberfläche (14), der Umfangsrille (3, 4, 5), die einen an der Rillenwand (10) vorgesehenen vertieften Teil (9) aufweist, der von der Rillenkante (2) aus, die auf der Bodenkontaktfläche des Laufstreifenteils (1) erscheint, in der Rillenbreitenrichtung nach außen vertieft ist, als L definiert ist, L/t1 größer als 1,0 ist.

**Revendications**

1. Pneumatique pour service intensif comprenant une partie formant bande de roulement (1),

   dans lequel la partie formant bande de roulement (1) comprend une pluralité de rainures circonférentielles (3, 4, 5) s'étendant en continu dans une direction circonférentielle du pneumatique,
   dans lequel la partie formant bande de roulement (1) comprend au moins une première couche (11) constituant une surface de bande de roulement (14),
   une deuxième couche (12) adjacente au côté intérieur de la première couche (11) dans une direction radiale du pneumatique, et
   une troisième couche (13), présente sur le côté intérieur de la deuxième couche (12) dans la direction radiale du pneumatique,
   dans lequel la première couche (11), la deuxième couche (12), et la troisième couche (13) sont composées de compositions de caoutchouc comprenant chacune un composant de caoutchouc,
   **caractérisé en ce que**
   quand une tan $\delta$ à 70 °C de la composition de caoutchouc constituant la première couche (11) est définie comme 70 °C tan $\delta$1, et qu'une tan $\delta$ à 70° C de la composition de caoutchouc constituant la deuxième couche (12) est définie comme 70 °C tan $\delta$2, 70 °C tan $\delta$1 / 70 °C tan $\delta$2 est inférieur à 1,0, de préférence inférieur à 0,95, de manière encore préférée inférieur à 0,90, et en outre de préférence supérieur à 0,40 et inférieur à 0,85, et
   quand un diamètre extérieur du pneumatique est défini comme Dt, en m, qu'une épaisseur de la première couche est définie comme t1, en mm, et qu'une profondeur de rainure au niveau d'une partie la plus profonde des rainures circonférentielles (3, 4, 5) est définie comme H, en mm, 70 °C tan $\delta$2 / Dt est supérieur à 0,09, de préférence supérieur à 0,10, de manière encore préférée supérieur à 0,12, et en outre de préférence supérieur à 0,14 et inférieur à 0,24, et t1/H est de 0,90 ou moins ;
   dans lequel « 70 °C tan $\delta$ » est une tangente de perte mesurée dans une condition d'une température de 70 °C, d'une fréquence de 10 Hz, d'une contrainte initiale de 10 %, d'une contrainte dynamique de 1 %, et d'un mode en extension.

2. Pneumatique pour service intensif selon la revendication 1, dans lequel 70 °C tan $\delta$2 est supérieure à 0,11.

3. Pneumatique pour service intensif selon la revendication 1 ou 2, dans lequel 70 °C tan $\delta$1 est inférieure à 0,10.

4. Pneumatique pour service intensif selon l'une quelconque des revendications 1 à 3, dans lequel, quand un rapport de relief dans une surface de contact au sol de la partie formant bande de roulement (1) est défini comme R, 70 °C tan $\delta$1 / R est inférieur à 0,120.

5. Pneumatique pour service intensif selon l'une quelconque des revendications 1 à 4, dans lequel une dureté Shore (Hs) de la première couche (11), mesurée selon la norme industrielle japonaise JIS K 6253-3:2012 à l'aide d'un duromètre de type A dans une condition d'une température de 23 °C, est de 65 ou plus.

6. Pneumatique pour service intensif selon l'une quelconque des revendications 1 à 5, dans lequel, quand un rapport de relief dans une surface de contact au sol de la partie formant bande de roulement (1) est défini comme R, 70 °C tan $\delta$2 / R est de 0,165 ou plus.

7. Pneumatique pour service intensif selon l'une quelconque des revendications 1 à 6, dans lequel un module M2 à 200 % d'allongement de la composition de caoutchouc constituant la deuxième couche (12) est de 9,0 MPa ou moins.

8. Pneumatique pour service intensif selon l'une quelconque des revendications 1 à 7, dans lequel un rapport de teneur en masse de silice sur un noir de carbone dans la composition de caoutchouc constituant la deuxième couche (12) est de 0,50 ou plus.

9. Pneumatique pour service intensif selon l'une quelconque des revendications 1 à 8, dans lequel un allongement à la rupture EB2 de la composition constituant la deuxième couche (12) est de 500 % ou plus.

10. Pneumatique pour service intensif selon l'une quelconque des revendications 1 à 9, dans lequel la composition de caoutchouc constituant la première couche (11) comprend un caoutchouc à base d'isoprène.

11. Pneumatique pour service intensif selon l'une quelconque des revendications 1 à 10, dans lequel une quantité de styrène totale dans la composition de caoutchouc constituant la deuxième couche (12) est inférieure à 20 % en masse, de préférence inférieure à 16 % en masse, de manière encore préférée inférieure à 12 % en masse, en outre de préférence inférieure à 8,0 % en masse.

12. Pneumatique pour service intensif selon l'une quelconque des revendications 1 à 11, dans lequel, quand une tan $\delta$ à 70 °C de la composition de caoutchouc constituant la troisième couche (13) est définie comme 70 °C tan $\delta$3, 70 °C tan $\delta$2 / 70 °C tan $\delta$3 est supérieur à 1,0, de préférence supérieur à 1,2, de manière encore préférée supérieur à 1,4, en outre de préférence supérieur à 1,6 et inférieur à 4,0.

13. Pneumatique pour service intensif selon l'une quelconque des revendications 1 à 12, dans lequel H est supérieure à 10 mm et inférieure à 20 mm.

14. Pneumatique pour service intensif selon l'une quelconque des revendications 1 à 13, dans lequel l'une au moins d'une paroi de rainure (10) de chaque rainure circonférentielle (3, 4, 5) est dotée d'une partie évidée (9) qui est évidée vers l'extérieur dans une direction de la largeur de rainure depuis un bord de rainure (2) apparaissant sur une face de contact au sol de la partie formant bande de roulement (1).

15. Pneumatique pour service intensif selon la revendication 14, dans lequel une distance, depuis une extrémité sur le côté extérieur de la partie évidée (9) dans la direction radiale du pneumatique jusqu'à la surface de bande de roulement (14), de la rainure circonférentielle (3, 4, 5) ayant une partie évidée (9) qui est évidée vers l'extérieur dans la direction de la largeur de rainure depuis le bord de rainure (2) apparaissant sur la face de contact au sol de la partie formant bande de roulement (1) prévue sur la paroi de rainure (10) est définie comme L, L/t1 est supérieur à 1,0.

# FIG. 1

# FIG.2

# FIG.3

**EP 4 331 868 B1**

## REFERENCES CITED IN THE DESCRIPTION

### Patent documents cited in the description

- JP 2007126523 A
- US 2012234442 A1
- US 2012298271 A1
- US 2021395499 A1